# EUROPÄISCHE PATENTSCHRIFT

(11) **EP 1 257 372 B1**
(45) Veröffentlichungstag und Bekanntmachung des Hinweises auf die Patenterteilung: **10.12.2003**
(21) Anmeldenummer: 01905817.1
(22) Anmeldetag: 22.02.2001
(51) Int. Cl.: B21D 7/08

(54) **BIEGEVORRICHTUNG ZUM BIEGEN VON PLASTISCH VERFORMBAREM BANDMATERIAL**
BENDING DEVICE FOR BENDING PLASTICALLY DEFORMABLE STRIP MATERIAL
DISPOSITIF DE PLIAGE POUR LE PLIAGE D' UN MATERIAU EN BANDE PLASTIQUEMENT DEFORMABLE

(30) Priorität: 24.02.2000 DE 10008714
(43) Veröffentlichungstag der Anmeldung: 20.11.2002
(73) Patentinhaber: Valeo Wischersysteme GmbH, 74321 Bietigheim-Bissingen (DE)
(72) Erfinder: LENZEN, Oliver, 74343 Sachsenheim (DE)
(74) Vertreter: Jahn, Wolf-Diethart
(86) Internationale Anmeldenummer: EP0102011
(87) Internationale Veröffentlichungsnummer: WO01062408

(56) Entgegenhaltungen:
- DE-A- 4 416 258
- DE-A- 19 816 609
- NL-A- 7 807 040

## Beschreibung

Die Erfindung betrifft eine Biegevorrichtung zum Biegen von plastisch verformbarem Bandmaterial, gemäß Oberbegriff des Anspruchs 1.

Diese Biegevorrichtung ist aus der DE-OS 198 16 609 A1 bekannt. Sie dient zum Biegen von Bandmaterialabschnitten, die zur Herstellung eines Flachbalkenscheibenwischers verwendet werden können. Die Biegeeinheit dieser bekannten Biegevorrichtung besteht im wesentlichen aus mehreren Auflagepunkten, durch die das zu biegende Bandmaterial hindurchgeführt wird. In Abhängigkeit des gewünschten Biegeradius wird die relative Lage der Auflagepunkte zueinander verändert. Um hochpräzise Biegeteile zu erhalten, ist es notwendig, die beim Biegen entstehenden Eigenspannungen im Bandmaterial durch ein kontrolliertes Rückbiegen zu reduzieren und somit die Formhaltigkeit des Werkstücks auch im Betrieb zu gewährleisten. Die Rückbiegeeinheit der bekannten Biegevorrichtung besteht im Wesentlichen aus einer Biegerolle, deren relative Lage zur Biegeeinheit veränderbar ist, so dass eine Rückbiegung im jeweils gewünschten Maß einstellbar ist.

Nachteilig an dieser Biegevorrichtung ist, dass die Lage der Rückbiegeeinheit sowohl von der Lage der Biegeeinheit als auch von dem gewünschten Maß der Rückbiegung abhängt. Die Abhängigkeit der Lage der Rückbiegeeinheit von der der Biegeeinheit führt dazu, dass selbst bei konstanter Rückbiegung, aber veränderlicher Vorbiegung die Rückbiegeeinheit entsprechend der Änderung der Biegung gesteuert werden muss. Wenn sowohl Biegung als auch Rückbiegung während des Biegevorgangs geändert werden sollen, müssen beide o. g. Abhängigkeiten bei der Steuerung der Lage der Rückbiegeeinheit berücksichtigt werden. Die Kopplung von Biegung und Rückbiegung kann negative Auswirkungen auf die Qualität der Werkstücke haben und erfordert außerdem maschinen- und steuerungsseitig einen hohen Aufwand.

Der Erfindung liegt die Aufgabe zugrunde, eine Biegevorrichtung zum Biegen von plastisch verformbarem Bandmaterial bereitzustellen, mit der Werkstücke in höchster Qualität herstellbar sind und die trotzdem einfach aufgebaut und einfach steuerbar ist.

Diese Aufgabe wird erfindungsgemäß gelöst durch eine Biegevorrichtung zum Biegen von plastisch verformbarem Bandmaterial, mit einer Vorschubeinheit, mit einer Führungseinheit, mit einer Biegeeinheit mit einer Rückbiegeeinheit, wobei die relative Lage der Rückbiegeeinheit zur Biegeeinheit veränderbar ist und wobei die Rückbiegeeinheit an der Biegeeinheit bewegbar angeordnet ist.

Durch die erfindungsgemäße Anordnung der Rückbiegeeinheit an der Biegeeinheit ist es möglich, die Rückbiegung, bzw. das Rückbiegemoment, mit geringem steuerungstechnischen Aufwand konstant zu halten, wenn die Biegung während des Biegevorgangs verändert wird, da die Rückbiegeinheit Stellbewegungen der Biegeeinheit ebenfalls ausführt. Wenn die Rückbiegung während des Biegevorgangs geändert werden soll, ist es lediglich erforderlich, die Rückbiegeeinheit relativ zur Biegeeinheit zu bewegen, so dass gegenüber der bekannten Biegevorrichtung eine entkoppelte, einfachere und genauere Steuerung der Rückbiegeeinheit erreicht wird.

Bei einer Variante der erfindungsgemäßen Biegevorrichtung ist vorgesehen, dass die Biegeeinheit eine Biegerolle aufweist, und dass die Rückbiegeeinheit um die Drehachse der Biegerolle drehbar ist, so dass die Rückbiegeeinheit mit einer einfachen, kostengünstigen und genauen Drehlagerung an der Biegeeinheit befestigt ist.

In Ergänzung der Erfindung ist die Biegeeinheit relativ zu der Führungseinheit verschiebbar, so dass unterschiedliche Biegeradien möglich sind.

Bei einer Ausgestaltung der Erfindung ist die Position der Biegeeinheit relativ zu der Führungseinheit gesteuert, insbesondere numerisch gesteuert, so dass eine Änderung des Biegeradius während des Biegevorgangs möglich ist.

Bei einer anderen Ausgestaltung der Erfindung ist die Drehung der Rückbiegeeinheit um die Drehachse der Biegerolle gesteuert, insbesondere numerisch gesteuert, so dass auch die Rückbiegung während des Biegevorgangs verändert werden kann.

Bei einer Ergänzung der Erfindung weist die Rückbiegeeinheit eine Schwinge auf, auf der eine Rückbiegerolle angeordnet ist, so dass ein einfacher und mechanisch hoch belastbarer Aufbau der erfindungsgemäßen Biegevorrichtung erreicht wird.

In weiterer Ergänzung der Erfindung ist der Abstand der Rückbiegerolle zur Drehachse der Biegerolle einstellbar, so dass ein weiterer Freiheitsgräd bei der Gestaltung des Rückbiegevorgangs erreicht wird.

Bei anderen Ausführungsformen der Erfindung ist vorgesehen, dass ein an der Biegeeinheit angeordnetes, die Rückbiegeeinheit mindestens mittelbar drehendes Stellglied, insbesondere ein Pneumatikzylinder, ein Hydraulikzylinder, ein Linearmotor oder ein Servomotor vorgesehen ist, so dass, je nach erforderlicher Positioniergenauigkeit die Rückbiegeeinheit gedreht werden kann.

Bei einer Ausgestaltung der Erfindung ist an der Rückbiegeeinheit ein Zahnrad vorgesehen, dessen Mittelpunkt in der Drehachse der Biegerolle liegt und treibt das Stellglied eine mit dem Zahnrad zusammenwirkende Zahnstange an, so dass unabhängig von der Drehposition der Rückbiegeeinheit die Stellkraft des Stellglieds proportional zu dem durch die Rückbiegung auf das Bandmaterial ausgeübten Drehmoment ist. Damit lässt sich auf einfachste Weise ein konstantes Rückbiegemoment einstellen.

Bei einer anderen Ausgestaltung der Erfindung ist das Stellglied an einem Punkt außerhalb der Drehachse der Biegerolle an der Rückbiegeeinheit angelenkt, so dass die Steuerung der Rückbiegeeinheit einfach und kostengünstig ist.

Eine andere Ausführungsform sieht vor, dass als Stellglied ein Servoantrieb vorgesehen ist.

Bei einer Ausgestaltung der Erfindung weist die Führungseinheit mehrere auf beiden Seiten des Bandmaterials angeordnete Führungsrollen auf, so dass die Ausrichtung und Führung des Bandmaterials reibungsarm, kostengünstig und betriebssicher erfolgt.

In Ergänzung der Erfindung ist vorgesehen, dass die Vorschubeinheit mindestens zwei auf gegenüberliegenden Seiten des Bandmaterials angeordnete Vorschubwalzen aufweist, und dass mindestens eine Vorschubwalze motorisch angetrieben wird, so dass auf einfache Weise das Bandmaterial durch die Biegevorrichtung transportiert werden kann. Der Antrieb der Vorschubeinheit kann numerisch gesteuert sein.

In weiterer Ergänzung der Erfindung ist eine, auch numerisch steuerbare, Trenneinheit vorgesehen, so dass nach Fertigstellen eines Werkstücks dieses von dem Bandmaterial abgetrennt werden kann.

In weiterer Ergänzung der Erfindung ist eine Leseeinheit vorgesehen, die in Abhängigkeit von Markierungen auf dem Bandmaterial Signale an die Steuerung der Biegevorrichtung sendet, so dass keine Kettenfehler bei der fortlaufenden Fertigung von Werkstücken aus dem Bandmaterial auftreten.

Weitere Vorteile und vorteilhafte Ausgestaltungen der Erfindung sind der nachfolgenden Beschreibung, der Zeichnung und den Ansprüchen entnehmbar.

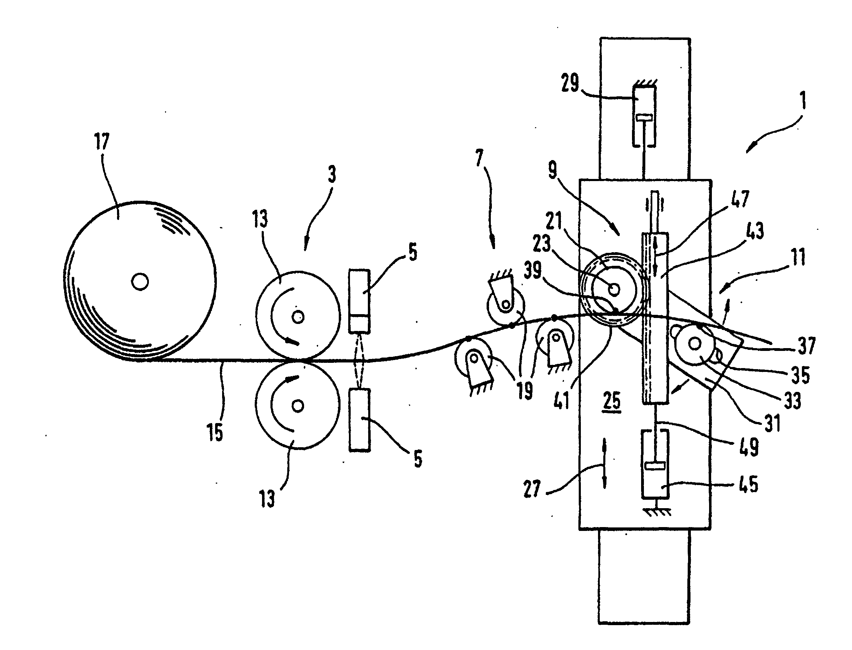

Ein Ausführungsbeispiel des Gegenstands der Erfindung ist in Fig. 1 schematisch dargestellt.

In Fig. 1 ist eine erfindungsgemäße Biegevorrichtung 1 schematisiert dargestellt. Sie besteht aus einer Vorschubeinheit 3, einer Leseeinheit 5, einer Biegeeinheit 9 und einer Rückbiegeeinheit 11.

Die Vorschubeinheit 3 besteht aus zwei Vorschubwalzen 13, zwischen denen ein Bandmaterial 15, welches auf einer Vorratsspule 17 aufgewickelt ist, hindurchläuft. Die Vorschubwalzen 13 sind angetrieben und üben eine Anpresskraft auf das Bandmaterial 15 aus, so dass die Vorschubkraft reibschlüssig von den Vorschubwalzen 13 auf das Bandmaterial 15 übertragen wird. In der Figur nicht dargestellt ist eine numerische Steuerung der Biegevorrichtung 1, welche auch die Vorschubeinheit 3 steuert. Ebenfalls nicht dargestellt sind Triggermarkierungen auf dem Bandmaterial 15, welche den Anfang und/oder das Ende eines Werkstücks markieren. Ebenfalls nicht dargestellt in der Figur sind mögliche Änderungen der Breite und/oder der Höhe des Querschnitts des Bandmaterials 15, wodurch sich unterschiedliche Biegesteifigkeiten ergeben.

In Durchlaufrichtung des Bandmaterials 15 gesehen ist hinter der Vorschubeinheit 3 die Leseeinheit 5 angeordnet, welche die in der Figur nicht dargestellten Triggermarkierungen des Bandmaterials 15 erkennen und entsprechende Signale an die Steuerung der Biegevorrichtung 1 übermittelt. Durch das Triggern der Steuerung mit dem Bandmaterial 15 werden Kettenfehler vermieden und somit die Präzision des fertigen Biegeteils erhöht.

An die Leseeinheit 5 schließt eine Führungseinheit 7 an, welche aus mehreren drehbar gelagerten Führungsrollen 19 besteht. Die Führungsrollen 19 sind beidseits des Bandmaterials 15 angeordnet und sorgen dafür, dass das Bandmaterial 15 mit einer definierten Richtung in die Biegeeinheit 9 eintritt und dass das beim Biegen auftretende Drehmoment abgeführt wird.

Die Biegeeinheit 9 weist eine Biegerolle 21 mit einer Drehachse 23 auf. Die Biegerolle 21 ist auf einem Schlitten 25 angeordnet, der wiederum in Richtung des Doppelpfeils 27 verschiebbar ist. Durch das Verschieben des Schlittens 25 wird der Biegeradius des Bandmaterials 15 bestimmt. Der Schlitten 25 wird durch einen stellzylinder 29 verschoben. Selbstverständlich sind auch Getriebemotoren mit Gewindespindel, Linearmotoren od. dgl. geeignet, um die Verschiebung des Schlittens 25 zu bewirken. Der Stellzylinder 29 wird von der Steuerung der Biegevorrichtung 1 gesteuert.

Die Rückbiegeeinheit 11 weist eine drehbar gelagerte Schwinge 31 auf, wobei die Drehachse der Schwinge 31 und die Drehachse 23 der Biegerolle 21 zusammenfallen. Auf der Schwinge ist eine Rückbiegerolle 33 angeordnet deren Drehachse parallel zur Drehachse 23 der Biegerolle 21 verläuft. Die Rückbiegerolle 33 ist in einem Langloch 35 der Schwinge 31 verschiebbar befestigt, so dass der Abstand zwischen Rückbiegerolle 33 und der Biegerolle 21 einstellbar ist. Ddurch ergibt sich ein weiterer Freiheitsgrad bei der Gestaltung der Rückbiegung.

Ein Berührpunkt 37 zwischen Rückbiegerolle 33 und Bandmaterial 15 liegt auf der anderen Seite des Bandmaterials 15 wie ein Berührpunkt 39 zwischen Biegerolle 21 und Bandmaterial 15.

Konzentrisch zur Drehachse 23 ist an der Schwinge.31 ein Zahnrad 41 drehfest angeordnet, in welches eine Zahnstange 43 eingreift, die von einem Stellglied 45 in Richtung des Doppelpfeils 47 verschiebbar ist. Das Stellglied 45 wird ebenfalls von der nicht dargestellten Steuerung der Biegevorrichtung 1 gesteuert. Eine Stellbewegung des Stellglieds 45 bewirkt eine Drehbewegung der Schwinge 31 um die Drehachse 23. Durch Verdrehen der Schwinge 31 kann somit jedes gewünschte Rückbiegemoment eingestellt werden.

Vorteilhaft an dieser Ausführungsform ist, dass, konstanten Druck, bzw. konstante Stellkraft des Stellglieds 45 vorausgesetzt, das Rückbiegemoment, welches von der Rückbiegerolle 33 auf das Bandmaterial 15 übertragen wird, unabhängig ist von der Position des Schlittens 25 bzw. dem Biegemoment, welches die Biegerolle 21 auf das Bandmaterial 15 ausübt. Biegen und Rückbiegen sind somit vollständig voneinander entkoppelt, was einerseits die Formhaltigkeit der gebogenen Werkstücke verbessert und andererseits die Steuerung der erfindungsgemäßen Biegevorrichtung vereinfacht.

Bei einer anderen Ausgestaltung, die nicht in der Fig. dargestellt ist, ist ein Arbeitskolben 49 des Stellglieds 45 direkt an der Schwinge 31 angelenkt, so dass eine besonders einfache und kostengünstige Drehung der Schwinge 31 möglich wird. Bei dieser Ausführungsform besteht ein nicht-linearer Zusammenhang mehr zwischen der Position des Stellglieds und dem von der Rückbiegerolle 33 auf das Bandmaterial 15 übertragene Rückbiegemoment. Da dieser nicht-lineare Zusammenhang eindeutig ist, kann durch die Steuerung des Stellglieds 45 das Rückbiegemoment genau eingestellt werden.

In der Figur ebenfalls nicht dargestellt ist eine Trenneinheit, mit der ein fertig bearbeitetes Werkstück von dem Bandmaterial 15 abgetrennt wird, worauf die Fertigung des nächsten Werkstücks beginnen kann.

Die erfindungsgemäße Biegevorrichtung ist besonders geeignet, um die Grundkörper von Flachbalkenscheibenwischern, von denen Ausführungsbeispiele in der US-PS 3,192,551 beschrieben sind, zu biegen.

### Bezugszeichenliste

- 1: Biegevorrichtung
- 3: Vorschubeinheit
- 5: Leseeinheit
- 7: Führungseinheit
- 9: Biegeeinheit
- 11: Rückbiegeeinheit
- 13: Vorschubwalze
- 15: Bandmaterial
- 17: Vorratsspule
- 19: Führungsrolle
- 21: Biegerolle
- 23: Drehachse
- 25: Schlitten
- 27: Doppelpfeil
- 29: Stellzylinder
- 31: Schwinge
- 33: Rückbiegerolle
- 35: Langloch
- 37: Berührpunkt zwischen Rückbiegerolle und Bandmaterial
- 39: Berührpunkt zwischen Biegerolle und Bandmaterial
- 41: Zahnrad
- 43: Zahnstange
- 45: Stellglied
- 47: Doppelpfeil
- 49: Arbeitskolben

## Patentansprüche

1. Biegevorrichtung zum Biegen von plastisch verformbarem Bandmaterial (15), mit einer Vorschubeinheit (3), mit einer Führungseinheit (7), mit einer Biegeeinheit (9), und mit einer Rückbiegeeinheit (11), wobei die relative Lage der Rückbiegeeinheit (11) zur Biegeeinheit (9) veränderbar ist, **dadurch gekennzeichnet, dass** die Rückbiegeeinheit (11) an der Biegeeinheit (9) bewegbar angeordnet ist.

2. Biegevorrichtung nach Anspruch 1, **dadurch gekennzeichnet, dass** die Biegeeinheit (9) eine Biegerolle (21) aufweist, und dass die Rückbiegeeinheit (11) um die Drehachse (23) der Biegerolle (21) drehbar ist.

3. Biegevorrichtung nach Anspruch 1 oder 2, **dadurch gekennzeichnet, dass** die Biegeeinheit (9) relativ zu der Führungseinheit (7) verschiebbar ist.

4. Biegevorrichtung nach Anspruch 3, **dadurch gekennzeichnet, dass** die Position der Biegeeinheit (9) relativ zu der Führungseinheit (7) gesteuert, insbesondere numerisch gesteuert, ist.

5. Biegevorrichtung nach einem der vorhergehenden Ansprüche, **dadurch gekennzeichnet, dass** die Drehung der Rückbiegeeinheit (11) um die Drehachse (23) der Biegerolle (21) gesteuert, insbesondere numerisch gesteuert, ist.

6. Biegevorrichtung nach einem der vorhergehenden Ansprüche, **dadurch gekennzeichnet, dass** die Rückbiegeeinheit (11) eine Schwinge (31) aufweist, dass auf der Schwinge (31) eine Rückbiegerolle (33) angeordnet ist.

7. Biegevorrichtung nach Anspruch 6, **dadurch gekennzeichnet, dass** der Abstand der Rückbiegerolle (33) zur Drehachse (23) der Biegerolle (21) einstellbar ist.

8. Biegevorrichtung nach einem der vorhergehenden Ansprüche, **dadurch gekennzeichnet, dass** ein an der Biegeinheit (9) angeordnetes, die Rückbiegeeinheit (11) mindestens mittelbar drehendes Stellglied (45) vorgesehen ist.

9. Biegevorrichtung nach Anspruch 8, **dadurch gekennzeichnet, dass** das Stellglied (45) ein Pneumatikzylinder, ein Hydraulikylinder oder ein Linearmotor ist.

10. Biegevorrichtung nach Anspruch 9, **dadurch gekennzeichnet, dass** an der Rückbiegeeinheit (11) ein Zahnrad (41) vorgesehen ist, dass der Mittelpunkt des Zahnrads (41) in der Drehachse (23) der Biegerolle (21) liegt, und dass das Stellglied (45) eine mit dem Zahnrad (41) zusammenwirkende Zahnstange (43) antreibt.

11. Biegevorrichtung nach Anspruch 9, **dadurch gekennzeichnet, dass** das Stellglied (45) an einem Punkt außerhalb der Drehachse (23) der Biegerolle (21) an der Rückbiegeeinheit (11) angelenkt ist.

12. Biegevorrichtung nach Anspruch 8, **dadurch gekennzeichnet, dass** das Stellglied (45) ein Servoantrieb ist.

13. Biegevorrichtung nach einem der vorhergehenden Ansprüche, **dadurch gekennzeichnet, dass** die Führungseinheit (7) mehrere auf beiden Seiten des Bandmaterials (15) angeordnete Führungsrollen (19) aufweist.

14. Biegevorrichtung nach einem der vorhergehenden Ansprüche, **dadurch gekennzeichnet, dass** die Vorschubeinheit (3) mindestens zwei auf gegenüberliegenden Seiten des Bandmaterials (15) angeordnete Vorschubwalzen (13) aufweist, und dass mindestens eine Vorschubwalze (13) motorisch angetrieben wird.

15. Biegevorrichtung nach einem der vorhergehenden Ansprüche, **dadurch gekennzeichnet, dass** eine Trenneinheit vorgesehen ist.

16. Biegevorrichtung nach einem der vorhergehenden Ansprüche, **dadurch gekennzeichnet, dass** eine Leseeinheit (5) vorgesehen ist, und dass die Leseeinheit (5) in Abhängigkeit von Markierungen auf dem Bandmaterial (15) Signale an die Steuerung der Biegevorrichtung (1) sendet.

## Claims

1. Bending device for bending plastically deformable strip material (15), having a feed unit (3), a guide unit (7), a bending unit (9) and a reverse bending unit (11), the position of the reverse bending unit (11) being adjustable in relation to the bending unit (9), **characterized in that** the reverse bending unit (11) is moveably arranged on the bending unit (9).

2. Bending device according to Claim 1, **characterised in that** the bending unit (9) has a bending roller (21), and that the reverse bending unit (11) is rotatable about the axis of rotation (23) of the bending roller (21).

3. Bending device according to Claim 1 or 2, **characterised in that** the bending unit (9) is displaceable in relation to the guide unit (7).

4. Bending device according to Claim 3, **characterised in that** the position of the bending unit (9) in relation to the guide unit (7) is controlled, and in particular numerically controlled.

5. Bending device according to any one of the preceding Claims, **characterised in that** the rotation of the reverse bending unit (11) about the axis of rotation (23) of the bending roller (21) is controlled, and in particular numerically controlled.

6. Bending device according to any one of the preceding Claims, **characterised in that** the reverse bending unit (11) has a rocker arm (31), and that a reverse bending roller (33) is arranged on the rocker arm (31).

7. Bending device according to Claim 6, **characterised in that** the distance of the reverse bending roller (33) from the axis of rotation (23) of the bending roller (21) is adjustable.

8. Bending device according to any one of the preceding Claims, **characterised in that** an actuator (45) is provided, which is arranged on the bending unit (9) and which rotates the reverse bending roller (11) at least indirectly.

9. Bending device according to Claim 8, **characterised in that** the actuator (45) is a pneumatic cylinder, a hydraulic cylinder or a linear motor.

10. Bending device according to Claim 9, **characterised in that** a gear (41) is provided on the reverse bending unit (11), that the centre of the gear (41) is situated on the axis of rotation (23) of the bending roller (21), and that the actuator (45) drives a rack (43) interacting with the gear (41).

11. Bending device according to Claim 9, **characterised in that** the actuator (45) is articulated on the reverse bending unit (11) at a point outside the axis of rotation (23) of the bending roller (21).

12. Bending device according to Claim 8, **characterised in that** the actuator (45) is a servo drive.

13. Bending device according to any one of the preceding Claims, **characterised in that** the guide unit (7) has multiple guide rollers (19) arranged on both sides of the strip material (15).

14. Bending device according to any one of the preceding Claims, **characterised in that** the feed unit (3) has at least two feed rollers (13) arranged on opposite sides of the strip material (15), and that at least one feed roller (13) is power-driven.

15. Bending device according to any one of the preceding Claims, **characterised in that** a separating unit is provided.

16. Bending device according to any one of the preceding Claims, **characterised in that** a reading unit (5) is provided, and that the reading unit (5) sends signals to the control system of the bending device (1) as a function of marks on the strip material (15).

## Revendications

1. Dispositif de cintrage permettant de cintrer un feuillard déformable en plastique (15) présentant une unité d'avance (3), une unité de guidage (7), une unité de cintrage (9), et une unité de contre-cintrage (11), moyennant quoi la position relative de l'unité de contre-cintrage (11) par rapport à l'unité de cintrage (9) est variable, **caractérisé en ce que** l'unité de contre-cintrage (11) peut se déplacer sur l'unité de cintrage (9).

2. Dispositif de cintrage selon la revendication 1, **caractérisé en ce que** l'unité de cintrage (9) présente un galet de cintrage (21), et **en ce que** l'unité de contre-cintrage (11) peut tourner autour de l'axe de rotation (23) du galet de cintrage (21).

3. Dispositif de cintrage selon la revendication 1 ou 2, **caractérisé en ce que** l'unité de cintrage (9) peut se déplacer par rapport à l'unité de guidage (7).

4. Dispositif de cintrage selon la revendication 3, **caractérisé en ce que** la position de l'unité de cintrage (9) est commandée par rapport à l'unité de guidage (7), en particulier commandée par voie numérique.

5. Dispositif de cintrage selon l'une quelconque des revendications précédentes, **caractérisé en ce que** la rotation de l'unité de contre-cintrage (11) est commandée autour de l'axe de rotation (23) du galet de cintrage (21), en particulier commandée par voie numérique.

6. Dispositif de cintrage selon l'une quelconque des revendications précédentes, **caractérisé en ce que** l'unité de contre-cintrage (11) présente un balancier (13), **en ce qu'**un galet de contre-cintrage (33) est disposé sur le balancier (31).

7. Dispositif de cintrage selon la revendication 6, **caractérisé en ce que** la distance entre la galet de contre-cintrage (33) et l'axe de rotation (23) du galet de cintrage (21) peut être réglée.

8. Dispositif de cintrage selon l'une quelconque des revendications précédentes, **caractérisé en ce qu'**il est prévu un élément de réglage (45) disposé au niveau de l'unité de cintrage (9), faisant tourner au moins indirectement l'unité de contre-cintrage (11).

9. Dispositif selon la revendication 8, **caractérisé en ce que** l'élément de réglage (45) est un cylindre pneumatique, un cylindre hydraulique ou un moteur électrique linéaire.

10. Dispositif selon la revendication 9, **caractérisé en ce que** , au niveau de l'unité de contre-cintrage (11), il est prévu une roue dentée (41), **en ce que** le centre de la roue dentée (41) se trouve sur l'axe de rotation (23) du galet de cintrage (21), et **en ce que** l'élément de réglage (45) actionne une crémaillère (43) agissant conjointement avec la roue dentée (41).

11. Dispositif de cintrage selon la revendication 9, **caractérisé en ce que** l'élément de réglage (45) est articulé sur un point situé en dehors de l'axe de rotation (23) du galet de contre-cintrage (11).

12. Dispositif selon la revendication 8, **caractérisé en ce que** l'élément de réglage (45) est une servocommande.

13. Dispositif selon l'une quelconque des revendications précédentes, **caractérisé en ce que** l'unité de guidage (7) présente plusieurs galets de guidage (19) disposés sur les deux côtés du feuillard (15) .

14. Dispositif selon l'une quelconque des revendications précédentes, **caractérisé en ce que** l'unité d'avance (3) présente au moins deux rouleaux entraîneurs (13) disposés sur les côtés opposés du feuillard (15), e **en ce qu'**au moins un rouleau entraîneur (13) est entraîné par un moteur.

15. Dispositif selon l'une quelconque des revendications précédentes, **caractérisé en ce qu'**il est prévu une unité de séparation.

16. Dispositif selon l'une quelconque des revendications précédentes, **caractérisé en ce qu'**il est prévu une unité de lecture (5), et **en ce que** l'unité de lecture (5) envoie, en fonction de repères sur le feuillard (15), des signaux à la commande du dispositif de cintrage (1).
